# EUROPÄISCHE PATENTSCHRIFT

(11) **EP 1 887 023 B1**
(45) Veröffentlichungstag und Bekanntmachung des Hinweises auf die Patenterteilung: **01.05.2013**
(21) Anmeldenummer: 07111612.3
(22) Anmeldetag: 03.07.2007
(51) Int. Cl.: C08G 77/388, D06M 15/643, A61K 8/898

(54) **Neuartige Polysiloxane mit quaternären Ammoniumgruppen, Verfahren zu deren Herstellung und deren Verwendung als Textilweichmacher**
New polysiloxanes with quaternary ammonium groups, method for their manufacture and their use as textile softeners
Polysiloxane d'un nouveau type doté de groupes d'ammonium quaternaires, son procédé de fabrication et son utilisation en tant qu'adoucissant pour textiles

(30) Priorität: 31.07.2006 DE 102006035511
(43) Veröffentlichungstag der Anmeldung: 13.02.2008
(73) Patentinhaber: Evonik Goldschmidt GmbH, 45127 Essen (DE)
(72) Erfinder: Ferenz, Dr. Michael, 45147, Essen (DE); Herrwerth, Dr. Sascha, 45134, Essen (DE); Maurer, Dr. Tobias, 42551, Velbert (DE)

(56) Entgegenhaltungen:
- DE-A1- 1 493 384
- US-A- 4 895 964
- US-A- 5 446 185

## Beschreibung

Die Erfindung betrifft neuartige Polysiloxane mit quaternären Ammoniumgruppen sowie ein Verfahren zu deren Herstellung. Sie betrifft ferner die Verwendung dieser Polymere als Weichmacher für Gewebe, Non-wovens und/oder Fasern aus natürlichen und/oder synthetischen Rohstoffen.

Polysiloxane mit quaternären Gruppen und deren Anwendung als Textilweichmacher sind aus der Patentliteratur bekannt. So werden zum Beispiel in der DE-AS 14 93 384 Strukturen beschrieben, bei denen Siloxane seitenständig mit Ammoniumgruppen modifiziert sind.

Die Patenschrift EP 0 282 720 beschreibt Strukturen, bei denen die quaternären Funktionen endständig an das Siloxan gebunden sind. Derartige Verbindungen bieten Vorteile hinsichtlich ihrer Wirkung als Textilweichmacher. So führen sie auf Textilien zu einem sehr angenehmen Griff. Dies lässt sich auf das nicht modifizierte Siloxan-Rückgrad zurückführen.

Der Nachteil der in der Patenschrift EP 0 282 720 beschriebenen Strukturen ist, dass der Modifikationsgrad maximal zwei beträgt. Wird eine Textilie mit derartigen Verbindungen behandelt, so erhält sie zwar einen guten Weichgriff, jedoch ist das Siloxan aufgrund seiner geringen Substantivität leicht wieder von dem entsprechendem Textil entfernbar, wie zum Beispiel durch Waschvorgänge. Es ist jedoch wünschenswert, dass das Siloxan auch nach der Wäsche auf dem Textil verbleibt und somit der Weichgriff nicht verloren geht.

Aus der DE-OS 33 40 708 sind polyquaternäre Polysiloxan-Polymere bekannt. Polyquaternäre Polysiloxan-Polymere dieses Typs weisen die oben beschriebenen Nachteile nicht auf. Der praktischen Verwendung dieser Verbindungen steht jedoch deren aufwendiges Herstellverfahren entgegen. Die Verbindungen sind nur in wirtschaftlich nicht vertretbaren Ausbeuten von ≤ 60 % der Theorie herstellbar.

Ebenso bekannt sind Polysiloxane mit seitenständigen quaternären Ammonium- oder (neutralen) Amingruppen des Typs MDₓD'_{y}M, wie sie zum Beispiel in DE 14 93 384 oder US 4, 895, 964 beschrieben werden. Dabei ist D' eine Einheit mit der allgemeinen Formel QSiYO_{2/2} und M eine Einheit der allgemeinen Formel Y₃SiO_{1/2}. Die Abkürzungen in den Formeln sind weiter hinten definiert.

Es ist bekannt, dass Polysiloxane mit seitenständigen quaternären Ammoniumgruppen bereits deutlich schlechter als Weichmacher für Textilien geeignet im Vergleich zu rein linearen a,ω-modifizierten Polysiloxanen.

In Abhängigkeit vom Siloxangerüst und dessen Kettenlänge sind die meisten auf dem Markt erhältlichen Siloxanquats in Wasser nicht selbstemulgierbar und können erst durch Zusätze von Emulgatoren und/oder Lösungsmitteln in eine wässrige Formulierung eingebracht werden.

Als Emulgatoren werden typischerweise Fettalkoholethoxylate mit Ethoxylierungsgraden zwischen 3 und 12 und in einem Verhältnis von Weichmacher zum Fettalkoholethoxylat von 4 zu 1 bis 2 zu 1 verwendet. Als Lösungsmittel finden zum Beispiel hoch siedende Glykole wie Dipropylenglykol oder Butyldiglykol Anwendung. Marktüblich sind Formulierungen mit einem Gehalt von 5 bis 20 % Siloxanquat, 2 bis 15 % Emulgator und 0 bis 10 % Lösungsmittel.

Allen Weichmacherformulierungen auf Basis von Polysiloxan-Polymeren des Standes der Technik ist weiterhin gemein, dass schon nach einmaligem Waschen eines mit ihnen ausgerüsteten Textils die weich machende Eigenschaft weitestgehend verloren geht.

Die mit gleicher Priorität hinterlegte EP 1 887 024 beschreibt bereits einen Teilbereich der erfindungsgemäßen Polysiloxane der Formel (I) (M' Dₙ]₃T mit n = 2 - 200.

Der Erfindung liegt daher die Aufgabe zugrunde, quaternäre Polysiloxan-Polymere zu finden, welche sich mit guten Ausbeuten herstellen lassen und darüber hinaus das gewünschte Eigenschaftsprofil aufweisen, insbesondere einen sehr guten hydrophilen Weichgriff sowie eine erhöhte Permanenz auf Textilien. Darüber hinaus sind eine hohe Sprungelastizität und eine verbesserte Entknitterungseigenschaft einer so ausgerüsteten Ware als weitere positive Eigenschaft zu bewerten.

Überraschenderweise wurde gefunden, dass Siloxane der allgemeinen Formel (I)

[M' Dₙ]₃T (I)

dieses leisten.

Darin bedeuten:
- M': = QSiY₂O_{1/2}
- D: = SiY₂O_{2/2}
- T: = SiZO_{3/2}
- Q: sind gleiche oder verschieden organische Reste, die Ammoniumfunktionen tragen,
- Y: sind gleiche oder verschiedene Reste aus der Gruppe Alkyl, Aryl oder Alkaryl mit 1 bis 30 C-Atomen, vorzugsweise Methyl oder Phenyl, insbesondere Methyl,
- Z: sind gleiche oder verschiedene Reste aus der Gruppe Alkyl, Aryl oder Alkaryl mit 1 bis 30 C-Atomen, vorzugsweise Methyl oder Phenyl, insbesondere Phenyl,
- T: ist im statistischen Mittel einmal in einer Polymerkette vorhanden. Es liegt jedoch eine Mischung von Molekülen vor, so dass ein gewisser Anteil der Moleküle keine oder mehrere T-Einheiten besitzt,
- n: ist 5 bis 250, bevorzugt 10 bis 150, insbesondere 12 bis 100, mit der proviso, dass der Bereich von n=2-200 nicht mitumfasst ist.

Geeignete Reste Q sind zum Beispiel Gruppen mit dem Aufbau -R1-R2, worin
- R1: vorzugsweise gleiche oder verschiedene, zweiwertige Reste sind, ausgewählt aus der Gruppe 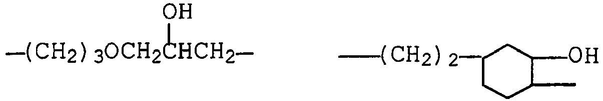 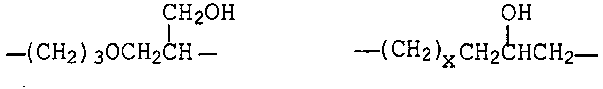 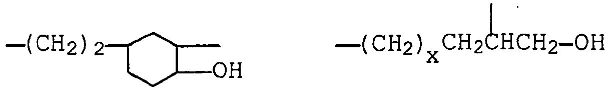 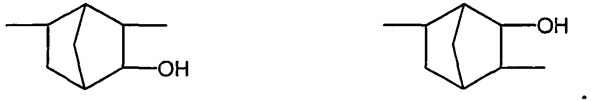 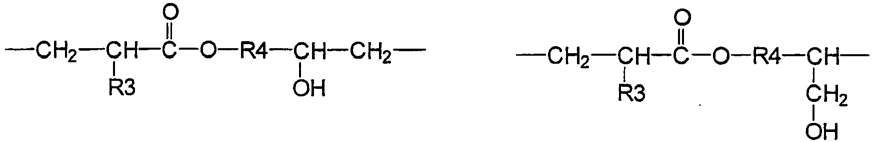
- R1: bevorzugt ist 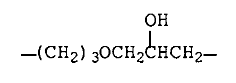
- R2: ausgewählt ist aus der Gruppe bestehend aus 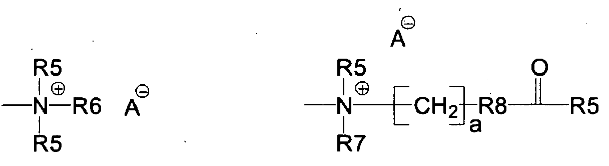 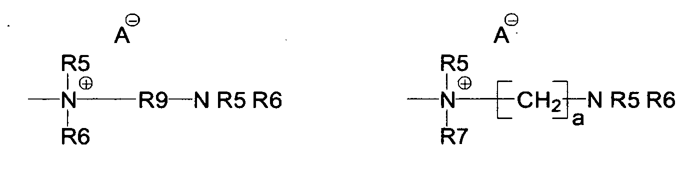 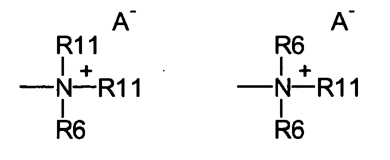
- R3: gleiche oder verschiedene Reste sind aus der Gruppe Wasserstoff oder Alkyl mit 1 bis 6 C-Atomen, bevorzugt Methyl,
- R4: gleiche oder verschiedene Reste, zweiwertige Kohlenwasserstoffreste, sind, die gegebenenfalls Etherfunktionen enthalten, bevorzugt Methylen,
- R5, R6, R7: jeweils unabhängig voneinander Wasserstoff oder Alkylreste sind mit 1 bis 30 C-Atomen,
- R8: gleiche oder verschiedene Reste sind aus der Gruppe -O-; -NR10,
- R9: gleiche oder verschiedene (n + 1)-bindige, gegebenenfalls verzweigte Kohlenwasserstoffreste, sind
- R10: gleiche oder verschiedene Reste sind aus der Gruppe Wasserstoff oder Alkyl mit 1 bis 6 C-Atomen,
- R11: gleiche oder verschiedene Reste sind der allgemeinen Formel 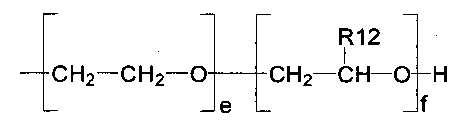
- R12: gleiche oder verschiedene Alkyl-, Aryl- oder Alkarylreste sind mit 1 bis 30 C-Atomen, die gegebenenfalls Etherfunktionen enthalten, bevorzugt Methyl, Ethyl oder Phenyl, insbesondere Methyl.
- e: 0 bis 20, bevorzugt 0 bis 10, insbesondere 1 bis 3
- f: 0 bis 20, bevorzugt 0 bis 10
- e + f: >= 1
- x: 2 bis 18
- a: 2 bis 18, vorzugsweise 3,
- A: gleiche oder verschiedene Gegenionen sind zu den positiven Ladungen an den quaternierten Stickstoffgruppen, ausgewählt aus den im Stand der Technik allgemein bekannten anorganischen oder organischen Anionen physiologisch verträglicher Säuren HA, wie besonders bevorzugt aus Essigsäure, L-Hydroxycarbonsäure oder aromatischen Carbonsäuren.

Es ist dem Fachmann geläufig, dass die Verbindungen in Form eines Gemisches mit einer im Wesentlichen durch statistische Gesetze geregelten Verteilung vorliegen.

Gegenstand dieser Erfindung ist auch ein Verfahren zur Herstellung der erfindungsgemäßen Produkte der Formel (I) mit n > 200 bis 250 durch Equilibrierung von Phenyltris-(dimethylsiloxy)silan mit Octamethylcylotetrasiloxan und/oder Decamethylcyclopentasiloxan (Cyclen) nach an sich bekannten Methoden. Phenyltris(dimethylsiloxy)silan ist ein kommerziell erhältliches Produkt. Geeignete Methoden zur Equilibrierung von Siloxanen werden zum Beispiel in der Patentschrift EP 1 439 200 beschrieben.

Der Inhalt der oben angeführten Patentliteratur zur Equilibrierung wird hiermit als Referenz eingeführt und gilt als Teil des Offenbarungsgehaltes der vorliegenden Anmeldung.

Neben cyclischen Siloxanen können bei der Equilibrierung auch a,ω-di-SiH-funktionelle Siloxane oder nicht funktionelle Siloxane der Equilibriermischung zugesetzt werden, um den mittleren Modifikationsgrad gezielt einzustellen.

Mit den so erhaltenen SiH-funktionellen Siloxanen werden anschließend Doppelbindungen enthaltende Epoxyde hydrosilyliert. Dem Fachmann sind die für die Hydrosilylierung verwendeten Pt-, Rh- oder Ru-Katalysatoren bekannt. Geeignete Epoxyde sind:

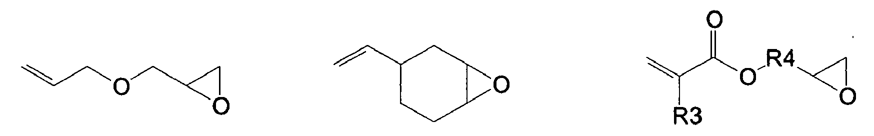

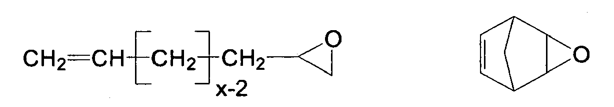

Die so erhaltenen Epoxysiloxane werden schließlich mit tertiären Aminen zu den gewünschten quaternären Ammonium-Funktionen tragenden Siloxanen umgesetzt werden.

Es ist dem Fachmann bekannt, dass im Rahmen einer derartigen Reaktionssequenz sowohl bei der Equilibrierung der SiH-funktionellen Siloxane als auch bei der Hydrosililierung und der Quaternisierung mit Nebenreaktionen zu rechnen ist. Der Umfang der Nebenreaktionen hängt unter anderem von der Art der Edukte als auch von den Reaktionsbedingungen ab.

Bei den erfindungsgemäßen Produkten handelt es sich um technische Produkte. Daher ist, insbesondere aufgrund der Nebenreaktionen, damit zu rechnen, dass im Mittel die Siloxane weniger als drei quaternäre Funktionen tragen und somit der mittlere Modifikationsgrad kleiner als drei ist.

Dem Fachmann ist bekannt, dass es neben dieser Syntheseroute auch andere Wege gibt, um erfindungsgemäße Produkte zu erhalten. So lassen sich insbesondere auch andere Edukte als Phenyltris(dimethylsiloxy)silan zur Einführung der Verzweigung einsetzen, wie zum Beispiel Methyltris(dimethylsiloxy)silan.

Ein weiterer Gegenstand der Erfindung ist die Verwendung der erfindungsgemäßen Verbindungen der Formel (I) mit n=5-250 als hydrophiler permanenter Weichmacher für Gewebe, Non-wovens und/oder Fasern aus natürlichen und/oder synthetischen Rohstoffen.

Für die Verwendung als Weichmacher für Fasern eignen sich bevorzugt Verbindungen nach Formel (I) mit n = 10 bis 150. Derartige Verbindungen weisen zum einen genügend hohen Siliconcharakter auf, um einen angenehmen Griff zu erzeugen, und zum anderen besitzen sie eine Viskosität, die es erlaubt, derartige Verbindungen wässrig zu formulieren.

Der Gehalt der erfindungsgemäß verwendeten Verbindung der allgemeinen Formel (I) in den wässrigen Formulierungen liegt zwischen 0,5 und 99 Gew.%, bevorzugt zwischen 3 und 70 Gew.%, im Besonderen zwischen 5 und 50 Gew.%, bezogen auf die gesamte Formulierung.

Nachfolgende Beispiele sollen zur Verdeutlichung der Erfindung dienen. Sie stellen jedoch keinerlei Einschränkung dar.

### Herstellungsbeispiele

### Beispiel 1:

### a) Equilibrierung eines SiH-funktionellen Polysiloxans

In einem 500 mL Dreihalskolben wurden 8,2 g Phenyltris(dimethylsiloxy)silan, 334 g Decamethylpentasiloxan, 0,34 g eines sauren Katalysators gemischt und 4 Stunden bei 80 °C gerührt. Nach dem Abkühlen wurden 20 g NaHCO₃ zugegeben und bei Raumtemperatur 12 Stunden gerührt. Nach einer Filtration wurde ein klares Produkt mit einem SiH-Wert von 0,02 % erhalten.

### b) Herstellung eines Epoxysiloxans

In einem 500 mL Dreihalskolben wurden 300 g der gemäß unter 1 a) hergestellten Verbindung und 7,5 g Allylglycidylether zusammen vorgelegt und auf 100 °C aufgeheizt. Anschließend wurden 15 ppm eines PlatinKatalysators zugesetzt und zwei Stunden lang gerührt. Nach einer anschließenden Reaktion erhielt man ein klares Produkt mit einem Epoxywert von 0,37 %.

### c) Umsetzung zum quaternären Polysiloxan-Polymer

In einem 500 mL Dreihalskolben wurden 14,5 g 3-N,N-Dimethyl-aminopropyl-laurylsäureamid, 2,7 g Essigsäure und 120 g Isopropanol bei Raumtemperatur gerührt. Anschließend wurden 200 g der gemäß 1 b) hergestellten Verbindung zugetropft. Anschließend wurde 8 Stunden bei 50 °C gerührt und destilliert. Es wurde eine trübe hochviskose Flüssigkeit erhalten, welche durch die folgende statistische Formel beschrieben wird:

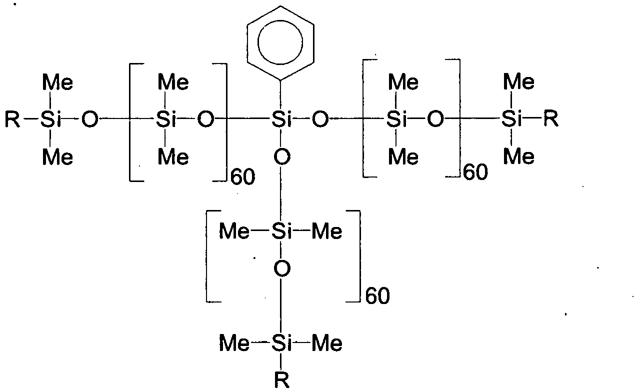

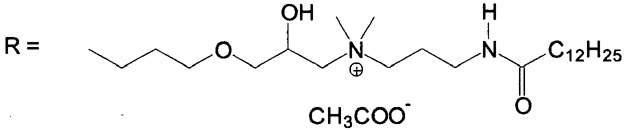

Dem Fachmann ist geläufig, dass die oben angegebene Formel eine idealisierte Strukturformel darstellt. Im Produkt liegen zusätzlich lineare und höher verzweigte Strukturen vor.

### Beispiel 2:

### a) Equilibrierung eines SiH-funktionellen Polysiloxans

In einem 1000 mL Dreihalskolben wurden 50 g Phenyltris(dimethylsiloxy)silan, 667 g Decamethylpentasiloxan, 0,7 g eines sauren Katalysators gemischt und 4 Stunden bei 80 °C gerührt. Nach dem Abkühlen wurden 15 g NaHCO₃ zugegeben und bei Raumtemperatur 12 Stunden gerührt. Nach einer Filtration wurde ein klares Produkt mit einem SiH-Wert von 0,07 % erhalten.

### b) Herstellung eines Epoxysiloxans

In einem 1000 mL Dreihalskolben wurden 670 g der gemäß unter 1 a) hergestellten Verbindung und 65 g Allylglycidylether zusammen vorgelegt und auf 100°C aufgeheizt. Anschließend wurden 15 ppm eines Platin-Katalysators zugesetzt und zwei Stunden lang gerührt. Nach einer anschließenden Reaktion erhielt man ein klares Produkt mit einem Epoxywert von 0,99 %.

### c) Umsetzung zum Silikonquat

In einem 1000 mL Dreihalskolben wurden 63 g N,N-Dimethyl-stearylamin, 12 g Essigsäure und 200 g Isopropanol bei Raumtemperatur gerührt. Anschließend wurden 325 g der gemäß 1 b) hergestellten Verbindung zugetropft. Anschließend wurde 8 Stunden bei 60°C gerührt und destilliert. Es wurde eine trübe, hochviskose Flüssigkeit erhalten, welche durch die folgende statistische Formel beschrieben wird.

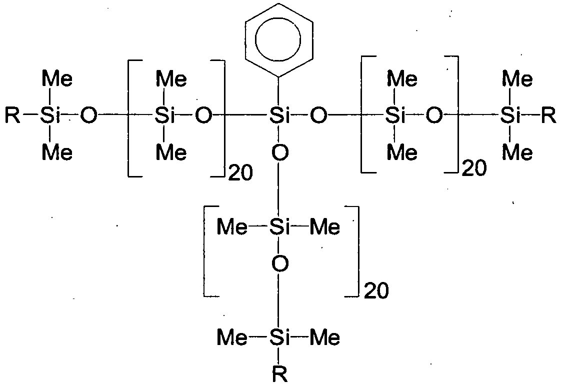

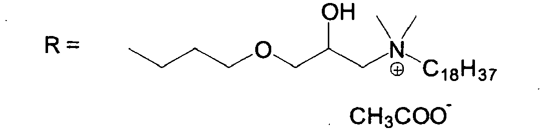

Dem Fachmann ist geläufig, dass die oben angegebene Formel eine idealisierte Strukturformel darstellt. Im Produkt liegen zusätzlich lineare und höher verzweigte Strukturen vor.

### Beispiel 3:

### a) Equilibrierung eines SiH-funktionellen Polysiloxans

In einem 500 mL Dreihalskolben wurden 33,1 g Phenyltris(dimethylsiloxy)silan, 274,4 g Decamethylpentasiloxan, 0,3 g eines sauren Katalysators gemischt und 4 Stunden bei 80 °C gerührt. Nach dem Abkühlen wurden 10 g NaHCO₃ zugegeben und bei Raumtemperatur 12 Stunden gerührt. Nach einer Filtration wurde ein klares Produkt mit einem SiH-Wert von 0,097 % erhalten.

### b) Herstellung eines Epoxysiloxans

In einem 250 mL Dreihalskolben wurden 103,5 g der gemäß unter 3 a) hergestellten Verbindung und 15 g Allylglycidylether zusammen vorgelegt und auf 100°C aufgeheizt. Anschließend wurden 15 ppm eines Platin-Katalysators zugesetzt und zwei Stunden lang gerührt. Nach einer anschließenden Reaktion erhielt man ein klares Produkt mit einem Epoxywert von 1,4 %.

### c) Umsetzung zum Silikonquat

In einem 500 mL Dreihalskolben wurden 32 g 3-N,N-Dimethyl-aminopropyl-laurylsäureamid, 6,2 g Essigsäure und 100 g Isopropanol bei Raumtemperatur gerührt. Anschließend wurden 115 g der gemäß 3 b) hergestellten Verbindung zugetropft. Anschließend wurde 8 Stunden bei 60°C gerührt und destilliert. Es wurde eine trübe hochviskose Flüssigkeit erhalten, welche durch die folgende statistische Formel beschrieben wird.

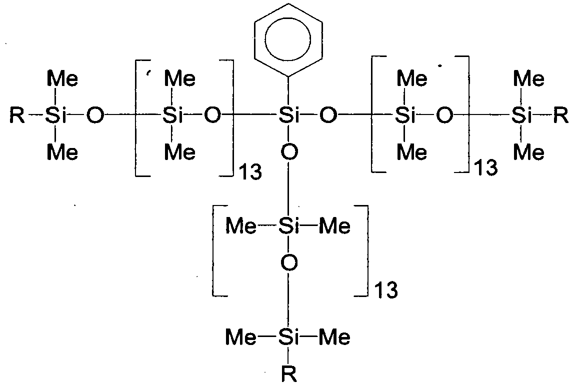

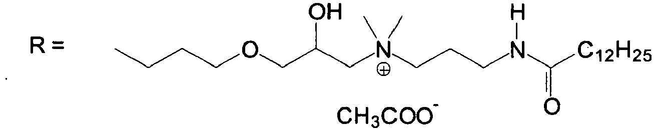

Dem Fachmann ist geläufig, dass die oben angegebene Formel eine idealisierte Strukturformel darstellt. Im Produkt liegen zusätzlich lineare und höher verzweigte Strukturen vor.

### Beispiel 4:

a) Equilibrierung eines SiH-funktionellen Polysiloxans
   In einem 500 mL Dreihalskolben wurden 3,3 g Phenyltris(dimethylsiloxy)silan, 220,4 g Decamethylpentasiloxan, 0,3 g eines sauren Katalysators gemischt und 4 Stunden bei 80 °C gerührt. Nach dem Abkühlen wurden 4,5 g NaHCO₃ zugegeben und bei Raumtemperatur 12 Stunden gerührt. Nach einer Filtration wurde ein klares Produkt mit einem SiH-Wert von 0,013 % erhalten.
b) Herstellung eines Epoxysiloxans
   In einem 1000 mL Dreihalskolben wurden 752 g der gemäß unter 4 a) hergestellten Verbindung und 14,8 g Allylglycidylether zusammen vorgelegt und auf 100°C aufgeheizt. Anschließend wurden 15 ppm eines Platin-Katalysators zugesetzt und zwei Stunden lang gerührt. Nach einer anschließenden Reaktion erhielt man ein klares Produkt mit einem Epoxywert von 0,21 %.
c) Umsetzung zum Silikonquat
   In einem 250 mL Dreihalskolben wurden 3,2 g 3-N,N-Dimethyl-aminopropyl-laurylsäureamid, 0,62 g Essigsäure und 50 g Isopropanol bei Raumtemperatur gerührt. Ansschließend wurden 76,2 g der gemäß 4 b) hergestellten Verbindung zugetropft. Anschließend wurde 8 Stunden bei 60°C gerührt und destilliert. Es wurde eine trübe hochviskose Flüssigkeit erhalten, welche durch die folgende statistische Formel beschrieben wird. 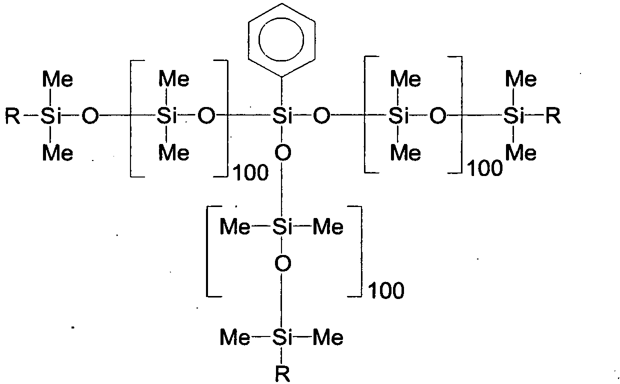 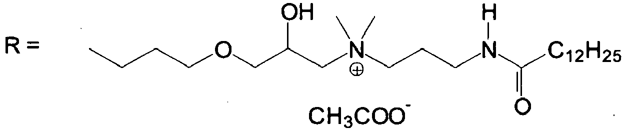 Dem Fachmann ist geläufig, dass die oben angegebene Formel eine idealisierte Strukturformel darstellt. Im Produkt liegen zusätzlich lineare und höher verzweigte Strukturen vor.

### Anwendungsbeispiele

### Formulierungsbeispiele

### Allgemeine Formulierung

5 bis 50 Gew.% des erfindungsgemäßen Siloxanquats werden in einem Becherglas mit Propellerrührer unter Rühren vorgelegt. Anschließend werden der Reihe nach 5 bis 25 Gew.% Dipropylenglykol, 3 bis 10 Gew.% eines Fettalkoholethoxylates mit einem Ethoxylierungsgrad von 6 und 3 bis 10 Gew.% eines Fettalkoholethoxylates mit einem Ethoxylierungsgrad von 12 unter Rühren hinzu gegeben. Zuletzt wird mit Wasser auf 100 Gew.% aufgefüllt.

### Formulierung 1 - Erfindungsgemäß

20 Teile des erfindungsgemäßen Siloxanquats aus Beispiel 1 werden in einem Becherglas mit Propellerrührer unter Rühren vorgelegt. Anschließend werden der Reihe nach 21 Teile Dipropylenglykol, 10 Teile eines Fettalkoholethoxylates mit einem Ethoxylierungsgrad von 6 und 10 Teilen eines Fettalkoholethoxylates mit einem Ethoxylierungsgrad von 12 unter Rühren hinzu gegeben. Zuletzt wird mit 39 Teilen Wasser aufgefüllt. Man erhält eine klare bis opake niedrigviskose Formulierung.

Analog zur Herstellung der allgemeinen Formulierung wurden aus den erfindungsgemäßen Beispielen 2, 3 und 4 die Formulierungen 2, 3 und 4 hergestellt.

### Formulierung 5 - nicht erfindungsgemäß

Eine handelsübliche Mikroemulsion eines mit Aminogruppen funktionalisierten Siloxans, zum Beispiel TEGOSIVIN^{®} IE 11/59 mit einem Feststoffgehalt von 20 Gew.%.

### Formulierung 6 - nicht erfindungsgemäß

Eine handelsübliche Emlusion eines organischen Weichmachers, zum Beispiel REWOQUAT^{®} WE 18 mit einem Feststoffgehalt von 15 Gew.%.

### Applikationsbeispiele

Zur Überprüfung des Griffes sowie der Hydrophilie der vorliegenden Erfindung wurden aus nativen Fasern bestehende Produkte mit folgendem Verfahren ausgerüstet:

### Foulardverfahren

Zur Ausprüfung des Weichgriffs der jeweiligen Emulsionen wurde Baumwollwirkware (160g/m²) und Baumwoll-Frottierware → Tab 1(400 g/m²) mit einer Flotte, die jeweils 20 g/l der entsprechenden Emulsion enthielt, foulardiert, auf ca. 100 % Flottenaufnahme abgequetscht und bei 130°C drei Minuten lang getrocknet.

Zur Ausprüfung des Hydrophilie wurden Baumwollwebware (200g/m²) mit einer Flotte, die jeweils 50 g/l der entsprechenden Emulsion enthielt, foulardiert und auf ca. 100 % Flottenaufnahme abgequetscht und bei 130°C während drei Minuten lang getrocknet.

### Testmethoden

### Griffbeurteilung

Zur Beurteilung des Warengriffes wurde ein erfahrenes Team zusammengestellt, das die anonymisierten Griffmuster, der mit den Emulsionen ausgerüsteten Wirk- und Frottierwaren, mit Hilfe eines Handpanneltests bewertete. Bei den Griffmustern aus Maschenware wurde zusätzlich eine nicht offensichtlich gekennzeichnete unbehandelte Probe hinzugelegt.

### Prüfung der Hydrophilie

Zur Überprüfung der Hydrophilie wurde die an DIN 53924 angelehnte interne Prüfmethode zur Messung der Steighöhe von Wasser verwendet. Dabei wird das ausgerüstete Baumwolltestgewebe in jeweils fünf 25 cm lange und 1,5 cm breite Streifen geschnitten, mit einem wasserlöslichen Stift markiert und an einer Halterung senkrecht straff, aber ohne Spannung, befestigt. Die Halterung wird anschließend für fünf Minuten so in ein Wasserbecken gestellt, dass 2 cm der Streifen ins Wasser eintauchen. Nachdem die Halterung 10 Minuten außerhalb des Wasserbeckens gestanden hat, wird die Steighöhe in cm abgelesen und gegen den Blindwert (Steighöhe der unbehandelten Baumwollstreifen x cm = 100%) bestimmt und in % vom Blindwert angegeben.

### Waschvorgang

Die Waschvorgänge wurden in einer handelsüblichen Waschmaschine, Miele Novotronic W 918, mit Buntwäsche ohne Vorwaschen bei 40°C mit wfk Standardwaschmittel IECA-Base und 3kg BW-Ballastgewebe gewaschen. Zuletzt wurde das so behandelte Gewebe 12 Stunden lang bei Raumtemperatur getrocknet.

Die Testergebenisse bezüglich des Weichgriffs sind in der Tabelle 1 und 2 und bezüglich der Hydrophilie in der Tabelle 3 aufgeführt.

**Tabelle 1**

| Weichgriffbeurteilung auf Baumwollwirkware nach Applikation durch Foulard | | | | |
|---|---|---|---|---|
| | vor der Wäsche | nach der 1. Wäsche | nach der 3. Wäsche | nach der 5. Wäsche |
| Formulierung 1 erfindungsgemäß | +++ | +++ | ++ | ++ |
| Formulierung 2 erfindungsgemäß | ++ | + | ○ | ○ |
| Formulierung 3 erfindungsgemäß | ++ | + | - | - |
| Formulierung 4 erfindungsgemäß | +++ | +++ | +++ | ++ |
| Formulierung 5 nicht erfindungsgemäß | +++ | ++ | ++ | ++ |
| Formulierung 6 nicht erfindungsgemäß | ++ | ○ | - | - |
| Unbehandelt | - | - | - | - |

| | | | | |
|---|---|---|---|---|
| +++ exzellent, ++ sehr gut, + gut, o befriedigend, -schlecht | | | | |

**Tabelle 2**

| Weichgriffbeurteilung auf Baumwollfrottierware nach Applikation durch Foulard | | | | |
|---|---|---|---|---|
| | vor der Wäsche | nach der 1. Wäsche | nach der 3. Wäsche | nach der 5. Wäsche |
| Formulierung 1 erfindungsgemäß | +++ | +++ | +++ | ++ |
| Formulierung 2 erfindungsgemäß | ++ | + | ○ | ○ |
| Formulierung 3 erfindungsgemäß | ++ | + | - | - |
| Formulierung 4 erfindungsgemäß | +++ | +++ | +++ | ++ |
| Formulierung 5 nicht erfindungsgemäß | +++ | ++ | ++ | ++ |
| Formulierung 6 nicht erfindungsgemäß | ++ | ○ | - | - |
| Unbehandelt | - | - | - | - |

| | | | | |
|---|---|---|---|---|
| +++ exzellent, ++ sehr gut, + gut, o befriedigend, - schlecht | | | | |

**Tabelle 3**

| Rücknetzverhalten auf Baumwollwebware | | | | |
|---|---|---|---|---|
| | vor der Wäsche | nach der 1. Wäsche | nach der 3. Wäsche | nach der 5. Wäsche |
| Formulierung 1 erfindungsgemäß | 83 | 84 | 84 | 87 |
| Formulierung 2 erfindungsgemäß | 85 | 85 | 90 | 90 |
| Formulierung 3 erfindungsgemäß | 86 | 88 | 91 | 93 |
| Formulierung 4 erfindungsgemäß | 80 | 80 | 79 | 81 |
| Formulierung 5 nicht erfindungsgemäß | 80 | 70 | 55 | 50 |
| Formulierung 6 nicht erfindungsgemäß | 80 | 95 | 98 | 98 |
| Unbehandelt | 100 | 100 | 100 | 100 |

### Erläuterung:

Es resultiert ein weicher, sehr flauschiger und seidiger Griff des mit dem erfindungsgemäßen Produkt ausgerüsteten Gewebes (zum Beispiel Formulierung 1). Darüber hinaus wies die so ausgerüstete Ware eine hohe Sprungelastizität und eine verbesserte Entknitterungseigenschaft auf.

Der angenehme Griff bleibt auch nach mehrmaligem Waschen im Wesentlichen erhalten. Zusätzlich ist zu erkennen, dass auch die Hydrophilie nach mehrmaligem Waschen erhalten bleibt.

Die mit Formulierung 5 auf Basis eines Aminosiloxan imprägnierte Baumwollware zeigt bei ebenfalls permanenter Griffbeurteilung (Tab. 1 und 2) eine typische Abnahme der Hydrophilie (Tab. 3).

Im Gegensatz hierzu verschlechtert sich der Weichgriff bei dem nichtpermanenten Produkt aus Beispiel 6 nach einmaligem Waschen bereits deutlich (Tab. 1 und 2). Die Entfernung des Weichmachers durch den Waschvorgang resultiert entsprechend in einer Erhöhung der Hydrophilie (Tab. 3).

## Patentansprüche

1. Polysiloxane der allgemeinen Formel (I)
[M' Dₙ]₃T (I)
worin bedeuten:
M' = QSiY₂O_{1/2}
D = SiY₂O_{2/2}
T = SiZO_{3/2}
Q = gleiche oder verschieden organische Reste, die Ammoniumfunktionen tragen,
Y = gleiche oder verschiedene Reste aus der Gruppe Alkyl, Aryl oder Alkaryl mit 1 bis 30 C Atomen, vorzugsweise Methyl oder Phenyl, insbesondere Methyl,
Z = gleiche oder verschiedene Reste aus der Gruppe Alkyl, Aryl oder Alkaryl mit 1 bis 30 C-Atomen, vorzugsweise Methyl oder Phenyl, insbesondere Phenyl,
n = 5 bis 250
mit der proviso, dass Polysiloxane mit n = 5 bis 200 nicht mit umfasst sind.

2. Polysiloxane gemäß Anspruch 1, worin bedeuten
Q Gruppen mit dem Aufbau -R1-R2 sind,
R1 gleiche oder verschiedene zweiwertige Reste sind, ausgewählt aus der Gruppe 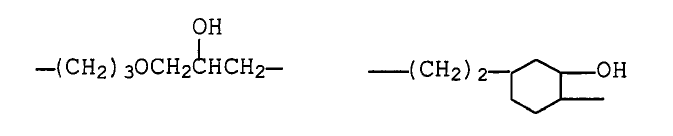 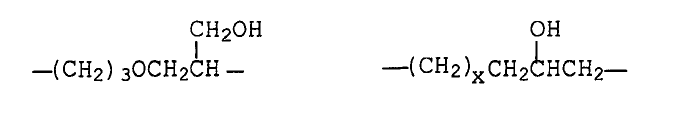 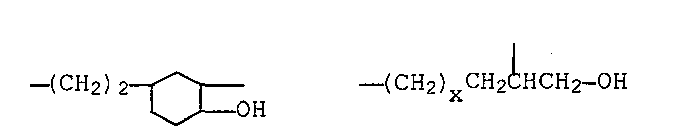 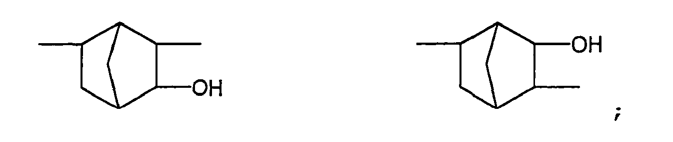 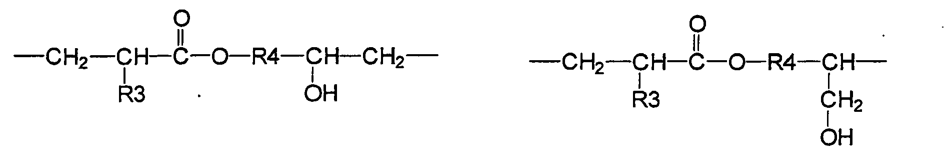
R2 gleiche oder verschiedene Reste sind, ausgewählt aus der Gruppe 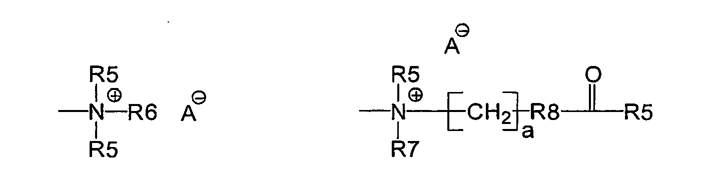 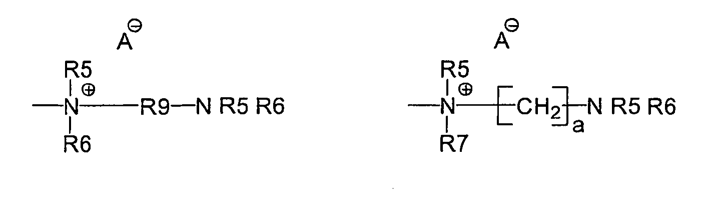 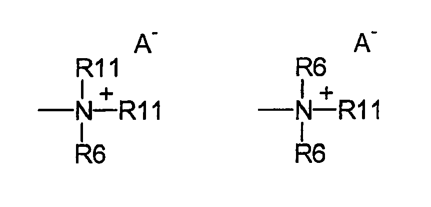
R3 gleiche oder verschiedene Reste sind aus der Gruppe Wasserstoff oder Alkyl mit 1 bis 6 C-Atomen, bevorzugt Methyl,
R4 gleiche oder verschiedene Reste, zweiwertige Kohlenwasserstoffreste, sind, die gegebenenfalls Etherfunktionen enthalten, bevorzugt Methylen,
R5, R6, R7 jeweils unabhängig voneinander Wasserstoff oder Alkylreste sind mit 1 bis 30 C-Atomen,
R8 gleiche oder verschiedene Reste sind aus der Gruppe -O-; -NR10,
R9 gleiche oder verschiedene (n + 1)-bindige, gegebenenfalls verzweigte Kohlenwasserstoffreste, sind
R10 gleiche oder verschiedene Reste sind aus der Gruppe Wasserstoff oder Alkyl mit 1 bis 6 C-Atomen,
R11 gleiche oder verschiedene Reste sind der allgemeinen Formel 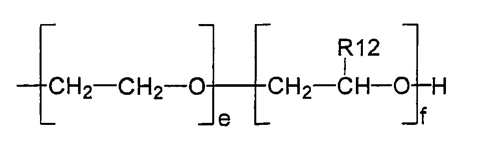
R12 gleiche oder verschiedene Alkyl-, Aryl- oder Alkarylreste sind mit 1 bis 30 C-Atomen, die gegebenenfalls Etherfunktionen enthalten, bevorzugt Methyl, Ethyl oder Phenyl, insbesondere Methyl.
e 0 bis 20, bevorzugt 0 bis 10, insbesondere 1 bis 3
f 0 bis 20, bevorzugt 0 bis 10
e + f >= 1
x 2 bis 18
a 2 bis 18,
A gleiche oder verschiedene Gegenionen sind zu den positiven Ladungen an den quaternierten Stickstoffgruppen, ausgewählt aus anorganischen oder organischen Anionen physiologisch verträglicher Säuren HA.

3. Polysiloxane gemäß mindestens einem der Ansprüche 1 und 2, **dadurch gekennzeichnet, dass**
R1 = -(CH₂)₃-O-CH₂-CH(OH)-CH₂-
ist.

4. Verfahren zur Herstellung von Polysiloxanen der allgemeinen Formel (I)
[M' Dₙ]₃ T (I),
worin bedeuten
M' = QSiY₂O_{1/2}
D = SiY₂O_{2/2}
T = SiZO_{3/2}
Q = gleiche oder verschieden organische Reste, die Ammoniumfunktionen tragen,
Y = gleiche oder verschiedene Reste aus der Gruppe Alkyl, Aryl oder Alkaryl mit 1 bis 30 C-Atomen, vorzugsweise Methyl oder Phenyl, insbesondere Methyl,
Z = gleiche oder verschiedene Reste aus der Gruppe Alkyl, Aryl oder Alkaryl mit 1 bis 30 C-Atomen, vorzugsweise Methyl oder Phenyl, insbesondere Phenyl,
n = 5 bis 250, mit der proviso, dass Polysiloxane mit n = 5 bis 200 nicht mit umfasst sind
**dadurch gekennzeichnet, dass** nach an sich bekannten Verfahrensbedingungen in erster Stufe Phenyltris(dimethylsiloxy)silan mit cyclischen Siloxanen equilibriert werden und diese anschließend in
zweiter Stufe mit Doppelbindungen enthaltenden Epoxyden hydrosilyliert werden und die so erhaltenen Epoxysiloxane in
dritter Stufe mit tertiären Aminen zu den entsprechenden Ammonium-Funktionen tragenden Siloxanen umgesetzt werden.

5. Verwendung der Polysiloxane der allgemeinen Formel (I)
[M' Dₙ]₃ T (I),
worin bedeuten
M' = QSiY₂O_{1/2}
D = SiY₂O_{2/2}
T = SiZO_{3/2}
Q = gleiche oder verschieden organische Reste, die Ammoniumfunktionen tragen,
Y = gleiche oder verschiedene Reste aus der Gruppe Alkyl, Aryl oder Alkaryl mit 1 bis 30 C-Atomen, vorzugsweise Methyl oder Phenyl, insbesondere Methyl,
Z = gleiche oder verschiedene Reste aus der Gruppe Alkyl, Aryl oder Alkaryl mit 1 bis 30 C-Atomen, vorzugsweise Methyl oder Phenyl, insbesondere Phenyl,
n= 5 bis 250, als Weichmacher für Gewebe, Non-wovens und/oder Fasern aus natürlichen und/oder synthetischen Rohstoffen.

6. Formulierung enthaltend 5 bis 50 Gew.% der Polysiloxane der allgemeinen Formel (I)
[M' Dₙ]₃ T (I),
worin bedeuten
M' = QSiY₂O_{1/2}
D = SiY₂O_{2/2}
T = SiZO_{3/2}
Q = gleiche oder verschieden organische Reste, die Ammoniumfunktionen tragen,
Y = gleiche oder verschiedene Reste aus der Gruppe Alkyl, Aryl oder Alkaryl mit 1 bis 30 C-Atomen, vorzugsweise Methyl oder Phenyl, insbesondere Methyl,
Z = gleiche oder verschiedene Reste aus der Gruppe Alkyl, Aryl oder Alkaryl mit 1 bis 30 C-Atomen, vorzugsweise Methyl oder Phenyl, insbesondere Phenyl,
n= 5 bis 250,.

7. Formulierung gemäß Anspruch 6 enthaltend 5 bis 50 Gew.% der Polysiloxane der allgemeinen Formel (I) mit Q = -R1-R2 und mit R1 = -(CH₂)₃-O-CH₂-CH(OH)-CH₂-.

## Claims

1. Polysiloxanes of the general formula (I)
[M' Dₙ]₃ T (I)
where:
M' = QSiY₂O_{1/2}
D = SiY₂O_{2/2}
T = SiZO_{3/2}
Q = identical or different organic radicals bearing ammonium functions,
Y = identical or different radicals from the group consisting of alkyl, aryl or alkaryl having 1 to 30 carbon atoms, preferably methyl or phenyl, in particular methyl,
Z = identical or different radicals from the group consisting of alkyl, aryl or alkaryl having 1 to 30 carbon atoms, preferably methyl or phenyl, in particular phenyl,
n = 5 to 250,
with the proviso that polysiloxanes where n = 5 to 200 are not included.

2. Polysiloxanes according to Claim 1 where
Q represents groups having the construction -R1-R2,
R1 represents identical or different bivalent radicals selected from the group consisting of 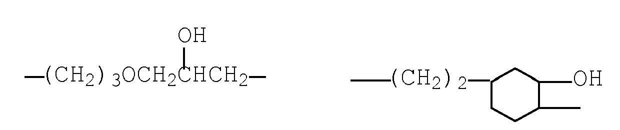 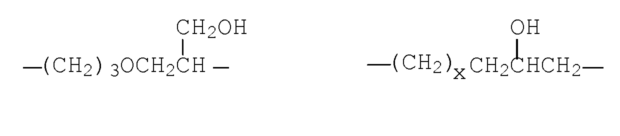 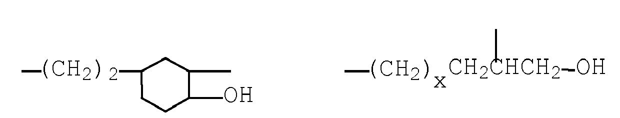 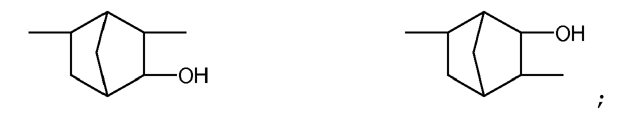 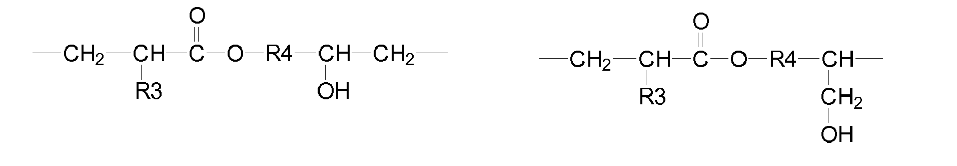
R2 represents identical or different radicals selected from the group consisting of 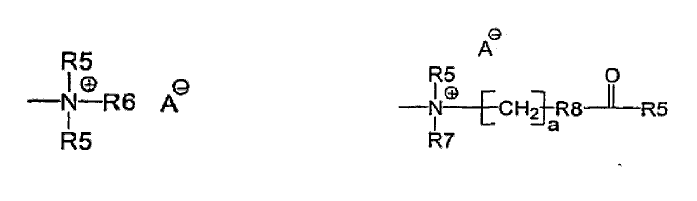 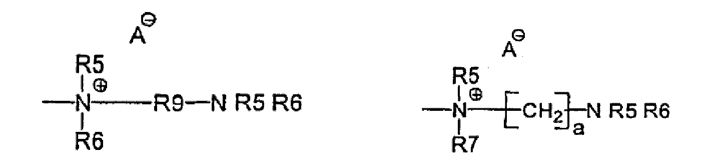 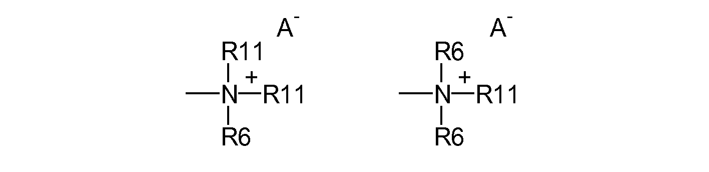
R3 represents identical or different radicals from the group consisting of hydrogen and alkyl having 1 to 6 carbon atoms, preferably methyl,
R4 represents identical or different radicals, bivalent hydrocarbyl radicals, with or without ether functions, preferably methylene,
R5, R6, R7 independently represent hydrogen or alkyl radicals having 1 to 30 carbon atoms,
R8 represents identical or different radicals from the group consisting of -O- and -NR10,
R9 represents identical or different (n + 1)-bonding, branched or unbranched hydrocarbyl radicals,
R10 represents identical or different radicals from the group consisting of hydrogen and alkyl having 1 to 6 carbon atoms,
R11 represents identical or different radicals of the general formula 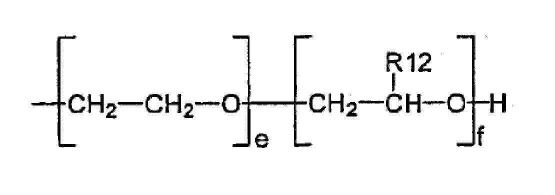
R12 represents identical or different alkyl, aryl or alkaryl radicals having 1 to 30 carbon atoms, with or without ether functions, preferably methyl, ethyl or phenyl, in particular methyl,
e represents 0 to 20, preferably 0 to 10, in particular 1 to 3,
f represents 0 to 20, preferably 0 to 10,
e + f >= 1
x represents 2 to 18,
a represents 2 to 18,
A represents identical or different counterions to the positive charges on the quaternized nitrogen groups, selected from organic or inorganic anions of physiologically acceptable acids HA.

3. Polysiloxanes according to at least one of the Claims 1 and 2 **characterized in that**
R1 = -(CH₂)₃-O-CH₂-CH(OH)-CH₂-.

4. Process for preparing a polysiloxane of the general formula (I)
[M' Dₙ]₃ T (I),
where
M' = QSiY₂O_{1/2}
D = SiY₂O_{2/2}
T = SiZO_{3/2}
Q = identical or different organic radicals bearing ammonium functions,
Y = identical or different radicals from the group consisting of alkyl, aryl or alkaryl having 1 to 30 carbon atoms, preferably methyl or phenyl, in particular methyl,
Z = identical or different radicals from the group consisting of alkyl, aryl or alkaryl having 1 to 30 carbon atoms, preferably methyl or phenyl, in particular phenyl,
n = 5 to 250, with the proviso that polysiloxanes where n = 5 to 200 are not included.
**Characterized in that** conventional conditions are applied to equilibrate phenyltris(dimethylsiloxy)silane with cyclic siloxanes in a first stage and
subsequently to hydrosilylate these in a second stage with epoxides comprising double bonds and
to react the epoxysilanes thus obtained with tertiary amines in a third stage to give the corresponding ammonio-bearing siloxanes.

5. Use of the polysiloxanes of the general formula (I)
[M' Dₙ]₃ T (I)
where:
M' = QSiY₂O_{1/2}
D = SiY₂O_{2/2}
T = SiZO_{3/2}
Q = identical or different organic radicals bearing ammonium functions,
Y = identical or different radicals from the group consisting of alkyl, aryl or alkaryl having 1 to 30 carbon atoms, preferably methyl or phenyl, in particular methyl,
Z = identical or different radicals from the group consisting of alkyl, aryl or alkaryl having 1 to 30 carbon atoms, preferably methyl or phenyl, in particular phenyl,
n = 5 to 250, as softeners for wovens, nonwovens and/or fibers composed of natural and/or synthetic raw materials.

6. Formulation comprising 5% to 50% by weight of the polysiloxanes of the general formula (I)
[M' Dₙ]₃ T (I)
where:
M' = QSiY₂O_{1/2}
D = SiY₂O_{2/2}
T = SiZO_{3/2}
Q = identical or different organic radicals bearing ammonium functions,
Y = identical or different radicals from the group consisting of alkyl, aryl or alkaryl having 1 to 30 carbon atoms, preferably methyl or phenyl, in particular methyl,
Z = identical or different radicals from the group consisting of alkyl, aryl or alkaryl having 1 to 30 carbon atoms, preferably methyl or phenyl, in particular phenyl,
n = 5 to 250,.

7. Formulation according to Claim 6 comprising 5% to 50% by weight of the polysiloxanes of the general formula (I) where Q = -R1-R2 and where R1 = -(CH₂)₃-O-CH₂-CH (OH) -CH₂-.

## Revendications

1. Polysiloxanes de formule générale (I)
[M' Dₙ]₃ T (I)
dans laquelle :
M' = QSiY₂O_{1/2}
D = SiY₂O_{2/2}
T = SiZO_{3/2}
Q représente des radicaux organiques identiques ou différents, qui portent des fonctions ammonium,
Y représente des radicaux identiques ou différents, choisis dans l'ensemble constitué par des groupes alkyle, aryle ou alkaryle ayant de 1 à 30 atomes de carbone, de préférence le groupe méthyle ou phényle, en particulier méthyle,
Z représente des radicaux identiques ou différents, choisis dans l'ensemble constitué par des groupes alkyle, aryle ou alkaryle ayant de 1 à 30 atomes de carbone, de préférence le groupe méthyle ou phényle, en particulier phényle,
n = 5 à 250.
étant entendu que ne sont pas compris les polysiloxanes où n = 5 à 200.

2. Polysiloxanes selon la revendication 1, dans lesquels
Q représentent des groupes de structure -R1-R2,
R1 représente des radicaux divalents identiques ou différents, choisis dans l'ensemble constitué par 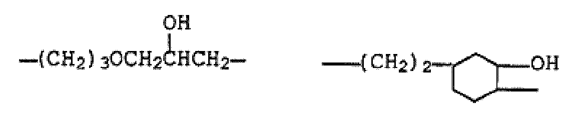 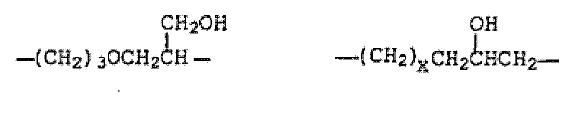 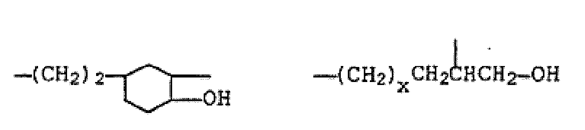 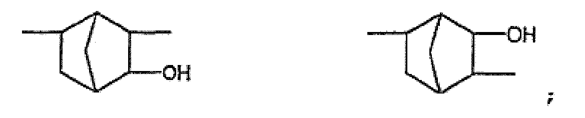 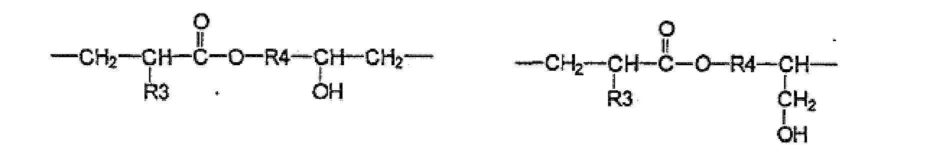
R2 représente des radicaux identiques ou différents, choisis dans l'ensemble constitué par 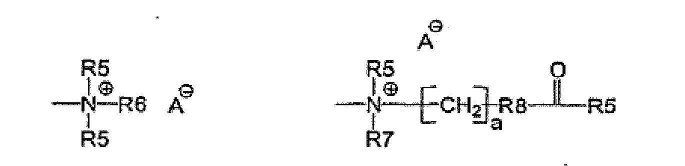 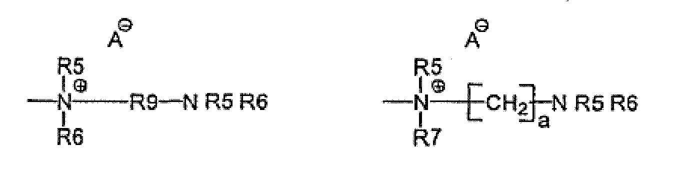 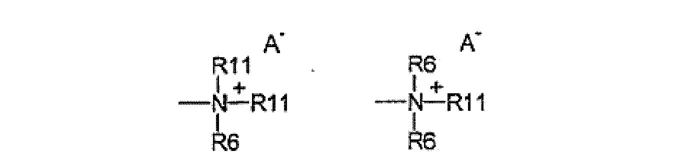
R3 représentent des radicaux identiques ou différents, choisis dans l'ensemble constitué par un atome d'hydrogène ou des groupes alkyle ayant de 1 à 6 atomes de carbone, de préférence méthyle,
R4 représentent des radicaux hydrocarbonés divalents identiques ou différents, qui éventuellement contiennent des fonctions éther, de préférence méthylène,
R5, R6, R7 représentent, chacun indépendamment, un atome d'hydrogène ou des radicaux alkyle ayant de 1 à 30 atomes de carbone,
R8 sont des radicaux identiques ou différents, choisis parmi -O- ; -NR10,
R9 sont des radicaux hydrocarbonés à (n + 1) liaisons, identiques ou différents, éventuellement ramifiés,
R10 sont des radicaux identiques ou différents, choisis dans l'ensemble constitué par un atome d'hydrogène et des groupes alkyle ayant de 1 à 6 atomes de carbone,
R11 sont des radicaux identiques ou différents, de formule générale 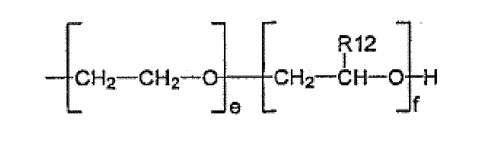
R12 sont des radicaux alkyle, aryle ou alkaryle identiques ou différents, ayant de 1 à 30 atomes de carbone, qui contiennent éventuellement des fonctions éther, de préférence méthyle, éthyle ou phényle, en particulier méthyle,
e vaut de 0 à 20, de préférence de 0 à 10, en particulier de 1 à 3
f vaut de 0 à 20, de préférence de 0 à 10,
e + f est 1,
x vaut de 2 à 18,
a vaut de 2 à 18,
A sont des ions identiques ou différents, opposés aux charges positives sur les groupes azotés quaternisés, choisis parmi des anions organiques ou inorganiques d'acides HA physiologiquement acceptables.

3. Polysiloxanes selon au moins l'une quelconque des revendications 1 et 2, **caractérisés en ce que**
R1 = -(CH₂)₃-O-CH₂-CH(OH)-CH₂-.

4. Procédé pour la préparation de polysiloxanes de formule générale (I)
[M' Dₙ]₃ T (I),
dans laquelle :
M' = QSiY₂O_{1/2}
D = SiY₂O_{2/2}
T = SiZO_{3/2}
Q représente des radicaux organiques identiques ou différents, qui portent des fonctions ammonium,
Y représente des radicaux identiques ou différents, choisis dans l'ensemble constitué par des groupes alkyle, aryle ou alkaryle ayant de 1 à 30 atomes de carbone, de préférence le groupe méthyle ou phényle, en particulier méthyle,
Z représente des radicaux identiques ou différents, choisis dans l'ensemble constitué par les groupes alkyle, aryle ou alkaryle ayant de 1 à 30 atomes de carbone, de préférence le groupe méthyle ou phényle, en particulier phényle,
n = 5 à 250, étant entendu que ne sont pas compris les polysiloxanes où n = 5 à 200,
**caractérisé en ce que** selon des conditions opératoires connues en soi dans une première étape on équilibre du phényltris(diméthylsiloxy)silane avec des siloxanes cycliques et ensuite
dans une deuxième étape on les soumet à une hydrosilylation avec des époxydes comportant des doubles liaisons et
dans une troisième étape on fait réagir les époxysilanes ainsi obtenus avec des amines tertiaires, pour aboutir aux siloxanes correspondants portant des fonctions ammonium.

5. Utilisation des polysiloxanes de formule générale (I)
[M' Dₙ]₃ T (I),
dans laquelle :
M' = QSiY₂O_{1/2}
D = SiY₂O_{2/2}
T = SiZO_{3/2}
Q représente des radicaux organiques identiques ou différents, qui portent des fonctions ammonium,
Y représente des radicaux identiques ou différents, choisis dans l'ensemble constitué par des groupes alkyle, aryle ou alkaryle ayant de 1 à 30 atomes de carbone, de préférence le groupe méthyle ou phényle, en particulier méthyle,
Z représente des radicaux identiques ou différents, choisis dans l'ensemble constitué par des groupes alkyle, aryle ou alkaryle ayant de 1 à 30 atomes de carbone, de préférence le groupe méthyle ou phényle, en particulier phényle,
n = 5 à 250, en tant que plastifiant pour tissus, non-tissés et/ou fibres à base de matières premières naturelles et/ou synthétiques.

6. Composition contenant de 5 à 50 % en poids des polysiloxanes de formule générale (I)
[M' Dₙ]₃ T (I),
dans laquelle :
M' = QSiY₂O_{1/2}
D = SiY₂O_{2/2}
T = SiZO_{3/2}
Q représente des radicaux organiques identiques ou différents, qui portent des fonctions ammonium,
Y représente des radicaux identiques ou différents, choisis dans l'ensemble constitué par des groupes alkyle, aryle ou alkaryle ayant de 1 à 30 atomes de carbone, de préférence le groupe méthyle ou phényle, en particulier méthyle,
Z représente des radicaux identiques ou différents, choisis dans l'ensemble constitué par des groupes alkyle, aryle ou alkaryle ayant de 1 à 30 atomes de carbone, de préférence le groupe méthyle ou phényle, en particulier phényle,
n = 5 à 250.

7. Composition selon la revendication 6, contenant de 5 à 50 % en poids des polysiloxanes de formule générale (I)
où Q = -R1-R2 et où R1 = -(CH₂)₃-O-CH₂-CH(OH)-CH₂-.
